# EUROPEAN PATENT SPECIFICATION

(11) **EP 3 252 927 B1**
(45) Date of publication and mention of the grant of the patent: **15.04.2020**
(21) Application number: 16172224.4
(22) Date of filing: 31.05.2016
(51) Int. Cl.: H02K 3/28, H02K 7/18

(54) **SEGMENTED ARMATURE ASSEMBLY**
SEGMENTIERTE ARMATURANORDNUNG
ENSEMBLE D'ARMATURE SEGMENTÉE

(43) Date of publication of application: 06.12.2017
(73) Proprietor: Siemens Gamesa Renewable Energy A/S, 7330 Brande (DK)
(72) Inventor: Azar, Ziad, Sheffield S6 2NR (GB); Thomas, Arwyn, Cheshire SK8 6HW (GB); Xia, Zhen Ping, Sheffield S10 5TR (GB)
(74) Representative: Aspacher, Karl-Georg

(56) References cited:
- US-A- 3 660 705
- US-A1- 2003 001 450
- US-A1- 2012 217 746
- US-A1- 2013 320 938

## Description

The invention describes a segmented armature assembly for a wind turbine generator; a wind turbine with a generator comprising such a segmented armature assembly; and a method of manufacturing a segmented armature assembly.

In large electrical machines such as generators, the armature can be a very heavy component since it is usually made of electrical steel, for example by tightly stacking laminar steel sheets. Further considerable weight is added by the windings or coils. For this reason, the armature (usually the stator) may be constructed from a plurality of segments to facilitate manufacture and installation. An armature segment is typically loaded with a number of coils or windings, and the loaded segments are then mechanically connected together to give an annular armature. A coil or winding generally comprises two long sections that fit into slots between armature teeth, and bent outer sections. The windings are electrically connected as appropriate, for example to connect all windings of a specific phase of a multi-phase system. In one approach as disclosed in US2013/0320938A1, each stator half is loaded with a separate stator winding arrangement connected to its own converter, and the converters are used to set the winding currents to achieve balanced radial forces acting on a rotor bearing. In another conventional winding arrangement, as disclosed in US 2013/0320938 A1, the phase windings are arranged in an interleaved manner about the armature to obtain an even distribution, with the aim of improving the fault response time of a wind turbine generator. When the armature is loaded with the windings of two or more distinct multi-phase winding systems, an even distribution is obtained by alternating sets of first system windings and second system windings. A "set" of a three-phase winding system comprises three windings, for example. An armature loaded with two winding systems is generally referred to as a "dual armature". It is desirable that the voltages between the phases of a winding system are equivalent or identical in order to maximise the power output of the generator, to eliminate parasitic effects such as losses and unwanted harmonics, and to simplify construction of the frequency converters (one each between a winding system and a grid transformer).

However, a segmented armature structure means that a gap or air space is present between any two adjacent armature segments, owing to a tolerance of the connection between adjacent armature segments. The gap interrupts the electromagnetic flux through the armature core. The gap between armature segments results in a variation in the induced back-EMF of the armature coils in such a way that the voltages are not identical between the different systems as well as different phases (i.e. in a three-phase winding system, the voltages between first and second phases, between second and third phases, and between third and first phases can be significantly different). The gaps in a segmented armature construction also generally result in second, fourth and eighth harmonics on the output power. These negative side-effects are problematic for any multi-system armature, i.e. a segmented armature carrying two or more such winding systems.

In a dual armature assembly carrying two multi-phase winding systems with a conventional winding layout for each of the two winding systems, there are unbalanced voltages between the phases of each system, and also imbalances between the two multi-phase winding systems. For example, for a dual armature assembly carrying two three-phase winding systems, the unbalanced back-EMF voltages in each three-phase system and between the two three-phase systems leads to differences in the harmonic components of the line voltages and the output power, giving rise to ripple in the DC link of the frequency converter of each winding system, and requiring that the DC-link voltage has a larger de-rating margin. Effectively, the converter cannot be utilized to the full. This ripple on the output power also causes system instability, so that a larger DC-link capacitor is required. The output power ripple also means that specific control algorithms are required to counteract or minimize the second harmonic ripple.

Another drawback arises during single-system operation, which can arise when one of the frequency converters of a multi-system armature assembly fails, and its winding system is essentially inactive. During single-system operation of a conventionally wound multi-system segmented armature assembly, the rotor eddy current loss is significant, causing unwanted heating of the rotor components in the generator. Rotor eddy currents raise the temperature of the magnets, but since the magnet performance can be damaged by excessive heat, the output power of the generator must be de-rated during single-system (i.e. fault-mode) operation, reducing the generator output power capacity under fault mode conditions to less than 50% in the case of a fault in a dual segmented armature assembly.

Another problem arising from the unbalanced three-phase voltages is that a second harmonic ripple can arise in the generator torque also. However, torque ripple causes unwanted noise and vibration.

It is therefore an object of the invention to provide a solution to the problem of imbalances on the phase voltages of an electrical machine comprising a segmented armature carrying two or more multi-phase winding systems.

This object is achieved by the dual armature assembly of claim 1; by the wind turbine of claim 5; and by the method of claim 6 of manufacturing a dual armature assembly.

According to the invention, the segmented armature assembly comprises an annular segmented armature comprising at least six armature segments separated by gaps. The segmented armature carries winding sets of two or more multi-phase winding systems, wherein each winding set comprises one winding for each phase of a specific multi-phase winding system. The inventive dual armature assembly is characterized by a balanced winding distribution. In the context of the invention, the expression "balanced winding distribution" is to be understood to mean that the winding distribution achieves balanced voltages between the phase windings of a multi-phase winding system, and also between the multi-phase winding systems.

This can be achieved by either a first balanced winding distribution or a second balanced winding distribution. In the first winding distribution, each armature segment carries winding sets of one multi-phase winding system only such that any one stator segment is flanked by two armature segments, each carrying only winding sets of the other winding system and wherein the winding sets on either side of a gap are a mirror image of the winding sets on either side of the other two closest gaps. In the second winding distribution, each armature segment carries an alternating arrangement of an even number of winding sets of the multi-phase winding systems, and the winding arrangement carried by one armature segment is a mirror image of the winding arrangement carried by its two adjacent armature segments. These balanced winding distributions are in contrast to the conventional winding arrangements, in which voltage imbalances are observed between the phases of each winding system, and between the winding systems also, on account of the differences in flux and the back-EMF arising due to the gaps between adjacent armature segments.

An advantage of the inventive dual armature assembly is that the balanced voltages of the winding systems reduce the likelihood of troublesome second harmonics in the torque ripple. Furthermore, should one of the winding systems fail for whatever reason, a notably lower level of rotor eddy current losses can be achieved during single-system operation of the electrical machine. When the inventive dual armature assembly is implemented in an electrical machine such as a generator, the balanced voltages allow for a fuller utilisation of the frequency converters, and a smaller DC link capacitor in each frequency converter.

The inventive wind turbine comprises a generator with such a dual armature assembly. The advantages of the balanced voltages which can be achieved by the inventive dual armature assembly translate into increased power output for the inventive generator, and increased revenue for the inventive wind turbine. Furthermore, the performance of the frequency converters can be improved.

According to the invention, the method of manufacturing a segmented armature assembly comprises the steps of providing a plurality of armature segments for an annular armature and providing winding sets of two multi-phase winding systems (as indicated above, a winding set comprises one winding for each phase of a specific winding system). The method is characterized by a step of distributing the winding sets over the segmented armature in a balanced winding distribution. This can be achieved by arranging winding sets of only one multi-phase winding system on each armature segment, and arranging the armature segments in an alternating manner so that, in this first balanced winding arrangement, the two armature segments on either side of any armature segment do not carry winding sets of that winding system. Alternatively, the balanced winding distribution can be achieved by placing an alternating arrangement of winding sets on each armature segment such that the arrangement carried by one armature segment is a mirror image of the arrangement carried by the adjacent armature segments. The first winding distribution and the second winding distribution achieve the same performance improvement, so that the easier option may be chosen during manufacture of the inventive dual armature assembly.

An advantage of the method according to the invention is that more favourably balanced voltages can be achieved in the windings of the dual armature assembly, without significant additional effort at the manufacturing stage, and without any additional design costs. By arranging the windings with a certain symmetry about the armature gaps as described above, the voltages between the phase windings of each winding system can be favourably balanced, and the winding systems are also favourable balanced relative to each other.

Particularly advantageous embodiments and features of the invention are given by the dependent claims, as revealed in the following description. Features of different claim categories may be combined as appropriate to give further embodiments not described herein.

An electrical machine comprises a field that carries the magnets, and an armature that carries the windings or coils. One of these components is stationary (the stator) while the other (the rotor) can rotate. In a large electrical machine such as a direct-drive wind turbine generator, the very heavy armature is generally the stator. Without restricting the invention in any way, it may be assumed in the following that the armature is the stator, and the terms "armature" and "stator" may be used synonymously.

In the context of the invention, the terms "armature assembly" or "stator assembly" are to be understood as the armature/stator loaded with the windings of two or more winding systems. The inventive segmented stator assembly comprises two or more multi-phase winding systems. For example, the segmented stator can carry the windings of three three-phase winding systems in either one of the balanced winding distributions described above. In the following, without restricting the invention in any way, reference is generally made to a segmented stator carrying two three-phase winding systems in order to simplify the description. A segmented armature that carries the windings of two multi-phase winding systems may be referred to as a "dual armature" or "dual stator" in the context of the invention.

The segmented stator can be realised as an outer stator. Equally, it can be realised as an inner stator, for example for use in a direct-drive wind turbine generator with an outer rotor directly connected to the hub and rotor. The terms "multi-phase winding system", "winding system" and "system" may be used interchangeably. The terms "coil" and "winding" are synonymous.

The segmented armature assembly according to the invention can be used in any large electrical machine that benefits from a segmented armature construction. An example of such a large electrical machine is the generator of a wind turbine. In the following, it may be assumed that the segmented armature assembly is for use in the generator of a wind turbine.

A stator assembly for a machine such as a wind turbine generator may be very large, particularly in the case of a direct drive wind turbine. To facilitate manufacturing and installation procedures, such a stator is generally divided up into segments of manageable dimensions, taking into consideration the weight of a stator segment after it has been loaded with windings According to the invention, the stator comprises six or more stator segments.

In a particularly preferred embodiment of the invention, an optimal number of six "changes" can be achieved between two winding systems, i.e. the winding sets can be arranged such that there are only six instances in which winding sets of the two systems are side-by-side. It has been observed that more than six such instances can result in an increase in rotor losses and significant voltage imbalance in single system (fault-mode) operation. If there are less than six such instances, an undesirable low-frequency vibration of the rotor may be observed in single system (fault-mode) operation.

In the first winding distribution, each stator segment is loaded with winding sets of one winding system only. In the context of the invention, such a winding distribution can be described as an alternating arrangement of singly-loaded stator segments. Preferably, each stator segment carries at least two winding sets.

The phase windings of a winding system must be electrically connected. Each stator segment may carry more than one coil per phase per winding system, so the coils can be connected in series or in parallel as appropriate. The series-connected coils of a phase on a particular segment are referred to as a "branch". In a particularly preferred embodiment of the invention, relating to the first winding distribution, appropriate phase windings of the winding sets on either side of a stator segment are series-connected. In other words, series connections are made between the phase windings of two winding sets that belong to the same winding system but are arranged at the outer ends of two stator segments that are on either side of an intervening stator segment (that is loaded with winding sets of the other winding system). By connecting the phase windings of every such pair in series, the coil voltages of the winding systems will compensate each other. The expression "pair of winding sets of a winding system" in the context of the first winding distribution disregards the intervening stator segment.

In the second winding distribution, each stator segment is loaded with an alternating arrangement of winding sets of both winding systems, and the arrangement carried by one stator segment is the opposite of the arrangement carried by its neighbouring or adjacent stator segments. In this way, winding sets of a winding system are arranged on each side of a gap. In the context of the invention, such a winding distribution can be described as a mirrored arrangement of alternately-loaded stator segments. Since the winding arrangements of adjacent stator segments are essentially mirror images of each other, in this embodiment, series connections are made between the phase windings of a pair of winding sets arranged on either side of a gap.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a segmented stator;
Fig. 2 shows a detail of a generator assembly comprising the segmented stator of Fig. 1;
Fig. 3 shows a schematic representation of a portion of a conventional dual stator assembly;
Fig. 4A shows a schematic representation of a first embodiment of the dual stator assembly according to the invention with two multi-phase winding systems;
Fig. 4B shows a schematic representation of a possible embodiment of a stator assembly with three multi-phase winding systems;
Fig. 5 shows a schematic representation of a second embodiment of the dual stator assembly according to the invention;
Fig. 6 shows winding voltages of the winding sets of a dual stator assembly according to the invention;
Fig. 7 shows winding voltages of the winding sets of a dual stator assembly with a one-piece stator;
Fig. 8 shows winding voltages of the winding sets of a conventional dual stator constructed from stator segments;
Fig. 9 shows electrical power harmonics for a dual stator assembly with a one-piece stator;
Fig. 10 shows electrical power harmonics for a conventional dual stator constructed from stator segments;
Fig. 11 shows electrical power harmonics for a dual stator according to the invention;
Fig. 12 shows electrical power harmonics for a conventional dual stator assembly and the inventive dual stator assembly;
Fig. 13 shows electrical power harmonics for a conventional dual stator assembly and the inventive dual stator assembly in a single-system mode of operation;
Fig. 14 shows rotor eddy current loss for dual stator assemblies in a single-system mode of operation;
Fig. 15 shows a winding connection scheme for a winding system of a six-segment dual stator assembly according to the invention;
Fig. 16 shows an alternative winding connection scheme for a winding system of a six-segment dual stator assembly according to the invention;
Fig. 17 is a schematic representation of a wind turbine with a generator comprising a dual stator assembly.

In the diagrams, like numbers refer to like objects throughout. Objects in the diagrams are not necessarily drawn to scale.

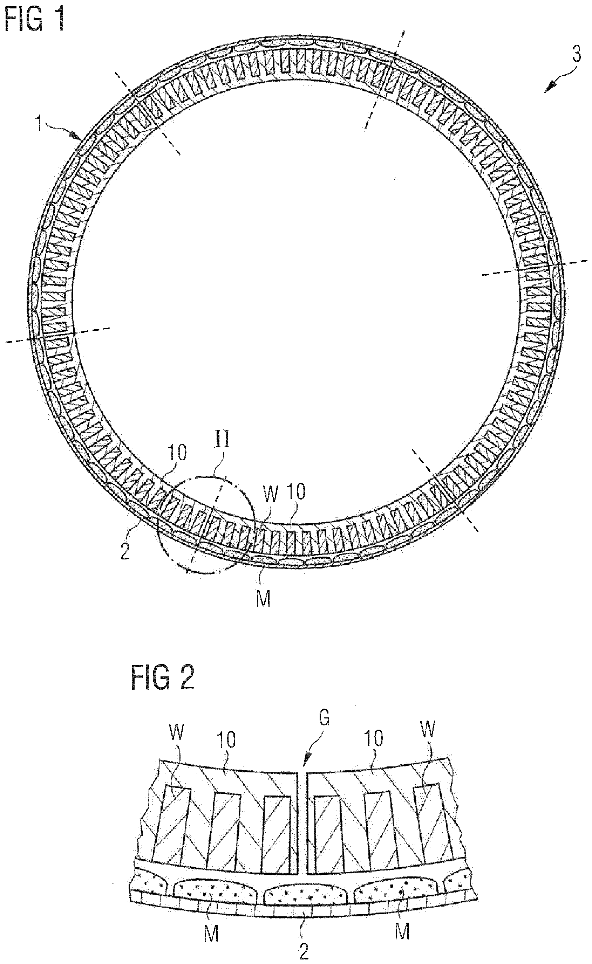

Fig. 1 shows a segmented stator 1 in a generator assembly. Here, the segmented stator is realised as an inner stator, and is enclosed by an outer rotor 2 bearing a magnet arrangement. In this embodiment, the segmented stator 1 comprises six segments. Fig. 2 shows a detail of the generator assembly comprising the segmented stator 1 of Fig. 1. The diagram shows a junction between adjacent stator segments 10, and indicates the unavoidable gap G between adjacent segments 10. The diagram also shows the stator slots containing the windings, and the magnets arranged to face the windings across an air-gap.

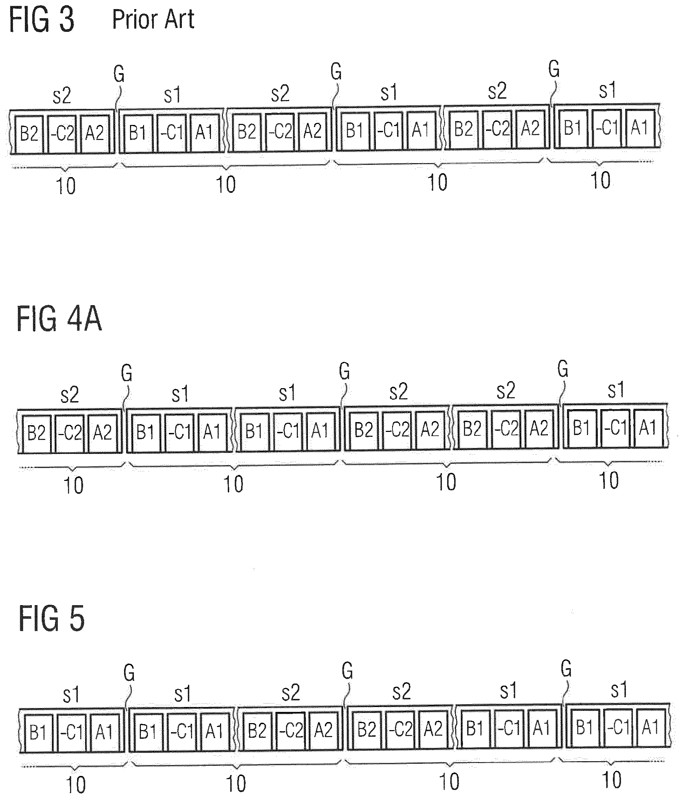

Figs. 3, 4A and5 are abstract representations of stator segments 10 and their winding arrangements for a dual stator carrying two winding systems S1, S2. The straight segments 10 shown in the diagrams are, in reality, curved sections of the annular stator. In each case, it may be assumed that the pattern shown in the diagram is repeated about the entire stator. A winding set s1 of the first winding system S1 comprises three windings W labelled A1, B1, C1; similarly a winding set s2 of the second winding system S2 comprises three windings W labelled A2, B2, C2. The windings W with their labels are depicted using a typical sign convention to indicate current flow direction. Fig. 3 shows a portion of a conventional dual stator assembly. Here, each stator segment 10 carries a repeating arrangement of winding sets, alternating between the first winding system S1 and the second winding system S2. In this conventional arrangement, a winding set of the second system is on the left-hand side of a gap G, and a winding set of the first system is on the right-hand side of a gap G. This arrangement repeats over the entire stator assembly, leading to voltage imbalances between the phase windings (e.g. the voltage between coil A and coil B is not the same as the voltage between coil B and coil C, etc.) and to voltage imbalances between the two winding systems S1, S2. The result is an undesirable development of harmonics on the output power, torque ripple, etc. Furthermore, should one of the systems S1, S2 fail, there will be a significant rotor eddy current loss, leading to a necessary de-rating of the output power.

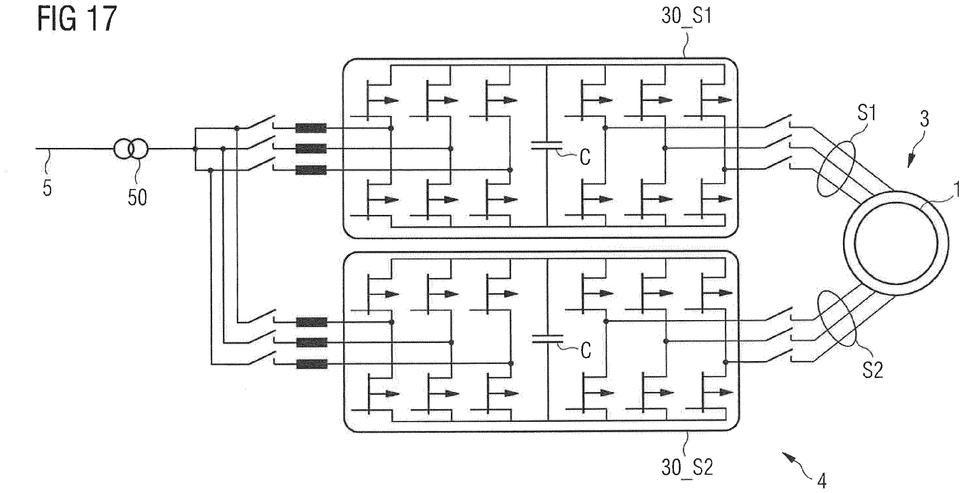

Fig. 4A shows a schematic representation of a first embodiment of the segmented stator assembly according to the invention, which can overcome the problems indicated above. Here, the segmented stator 1 is a dual stator 1 and carries two winding systems S1, S2 as shown in Fig. 17. Each stator segment 10 is loaded with winding sets s1, s2 of one winding system only, i.e. either with winding sets s1 of the first system S1, or winding sets s2 of the second system S2. Any one stator segment 10 is therefore flanked or neighboured by two stator segments 10 carrying winding sets of the other system. In this first balanced winding distribution, the winding sets on either side of a gap G are a mirror image of the winding sets on either side of the other two closest gaps G. In other words, if one gap has a winding set of the first system S1 on its left, and a winding set of the second system S2 on its right, the next gap (in either direction) will have a winding set of the second system S2 on its left, and a winding set of the first system S1 on its right. This arrangement repeats over the entire stator assembly, achieving balanced voltages between the phase windings and between the phases. The result is favourably low or non-existent harmonics. Furthermore, should one of the systems S1, S2 fail, there will be a significantly lower rotor eddy current loss, so that the generator need not be de-rated.

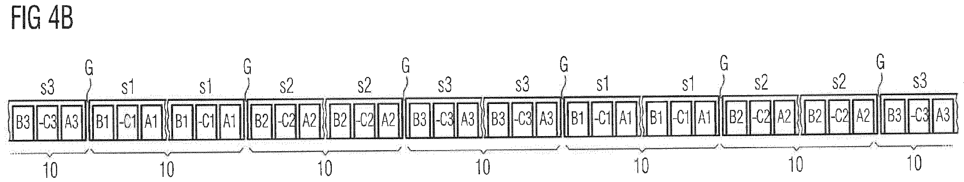

Fig. 4B shows a similar arrangement, for a segmented stator 1 that carries three winding systems S1, S2, S3. Each stator segment 10 is loaded with winding sets s1, s2, s3 of one winding system only, i.e. either with winding sets s1 of the first system S1, winding sets s2 of the second system S2, or winding sets of the third system S3. In this first balanced winding distribution, any one stator segment 10 is therefore flanked or neighboured by two stator segments 10, each carrying winding sets of one of the other two systems. Here also, the winding arrangement repeats over the entire stator assembly, achieving balanced voltages between the phase windings and between the phases. The advantages are as described above under Fig. 4A.

Fig. 5 shows a schematic representation of a second embodiment of the inventive dual stator assembly that also can overcome the problems indicated above. Here, the stator segments 10 carry an even number of winding sets, and are each loaded with an alternating arrangement of winding sets s1, s2 of both winding systems S1, S2. This ensures that the winding arrangement carried by any one stator segment 10 is a mirror image of the winding arrangement carried by an adjacent or neighbouring stator segment 10. In this second balanced winding distribution, the winding sets on either side of a gap G both belong to one winding system (for example a pair of winding sets s1 of system S1), and the winding sets on either side of the next gap G (in either direction) belong to the other winding system (for example a pair of winding sets s2 of system S2). This arrangement repeats over the entire stator assembly, and has the same beneficial effects as described above in relation to Fig. 4A and Fig. 4B.

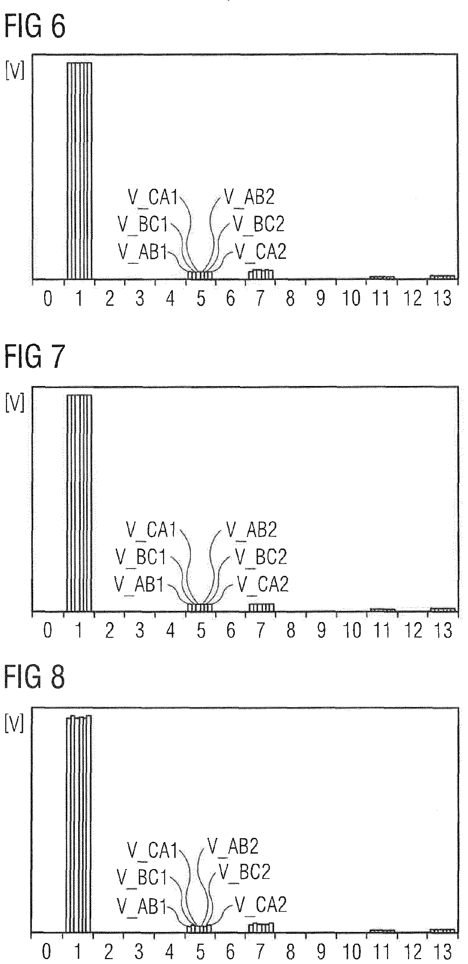

Figs. 6 - 8 each show a frequency spectrum for the line voltages of the winding systems of a dual stator assembly. In each case, the six columns indicate phase voltage harmonics V_AB1, V_BC1, VCA1, V_AB2, V_BC2, VCA2 with suffix 1 denoting the first multiphase winding system S1, and suffix 2 denoting the second multiphase winding system S2. Fig. 6 shows results for the inventive dual segmented stator assembly with one of the proposed balanced winding arrangements. The diagram indicates favourable balanced voltages at the fundamental frequency (denoted by number 1) with only very little differences between the phases. The 5th harmonic contributions are also essentially identical, and the 7th harmonic contributions show very little difference. 3rd, 11th and 13th harmonics are negligible. Fig. 7 shows results for a dual stator assembly in which the stator is constructed without any gaps (non-segmented). Here, the voltages at the fundamental frequency are essentially identical. The 5th and 7th harmonic contributions are also essentially identical, and the 3rd, 11th and 13th harmonics are negligible. A comparison of the results of Fig. 6 with these "ideal" results demonstrates that the voltage behaviour achieved by the inventive dual stator assembly with its balanced winding arrangement comes very close to ideal voltage behaviour. Fig. 8, in contrast, shows results for a conventional dual segmented stator wound in the conventional manner described in Fig. 3. In this case, the fundamental voltages differ significantly, as do the 5th and 7th harmonic voltage contributions. Non-negligible 3rd, 11th and 13th harmonics are also observed.

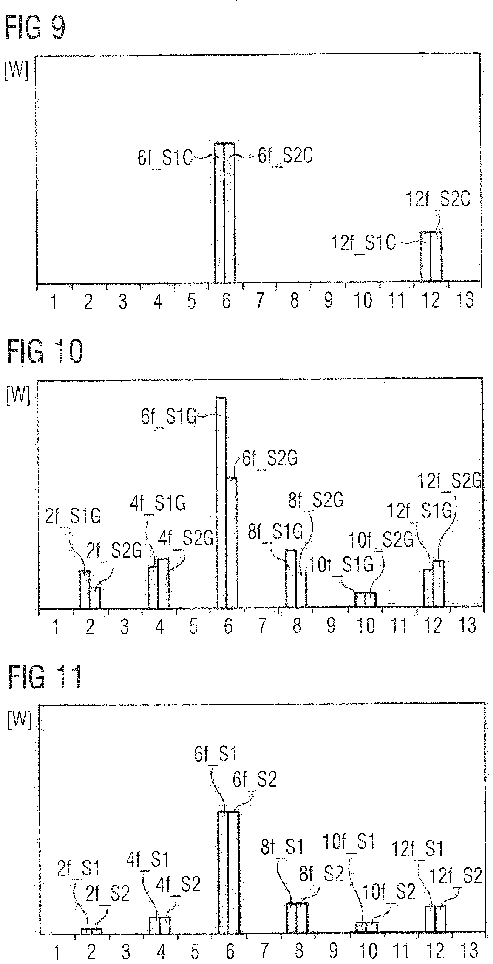

Fig. 9 shows power output harmonics for a dual stator assembly with a one-piece stator, i.e. a stator without any gaps in its construction. In this "ideal" assembly, second, fourth and eighth harmonics are absent, and the sixth harmonics 6f_S1C, 6f_S2C are essentially equal for both systems S1, S2. The same applies to the twelfth harmonics 12f_S1C, 12f_S2C. The suffix C denotes the closed or one-piece stator construction.

Fig. 10 shows output power harmonics for a dual segmented stator carrying two winding systems S1, S2 in a conventional winding arrangement as explained in Fig. 3 above. The suffix G denotes the segmented stator construction. The diagram shows second harmonics 2f_S1G, 2f S2G, fourth harmonics 4f_S1G, 4f_S2G, sixth harmonics 6f_S1G, 6f_S2G, eighth harmonics 8f_S1G, 8f_S2G, tenth harmonics 10f_S1G, 10f_S2G and twelfth harmonics 12f_S1G, 12f_S2G. The second harmonic 2f_S1 is observed on the output power of the first winding system S1; the second harmonic 2f_S2 is observed on the output power of the second winding system S2, etc. In each case, there are significant differences between the harmonics of the first system S1 and the second system S2. This imbalance is due to the presence of the stator gaps in combination with the regular or conventional winding arrangement.

Fig. 11 shows output power harmonics for a dual segmented stator according to the invention. The diagram shows second harmonics 2f_S1, 2f_S2, fourth harmonics 4f_S1, 4f_S2, sixth harmonics 6f_S1, 6f_S2, eighth harmonics 8f_S1, 8f_S2, tenth harmonics 10f_S1, 10f_S2 and twelfth harmonics 12f_S1, 12f_S2. Each harmonic of one winding system is essentially equal to the corresponding harmonic of the other winding system, furthermore the amplitudes of the harmonics are lower than their counterparts in a conventional winding arrangement, demonstrating the favourable effects of the inventive winding distributions.

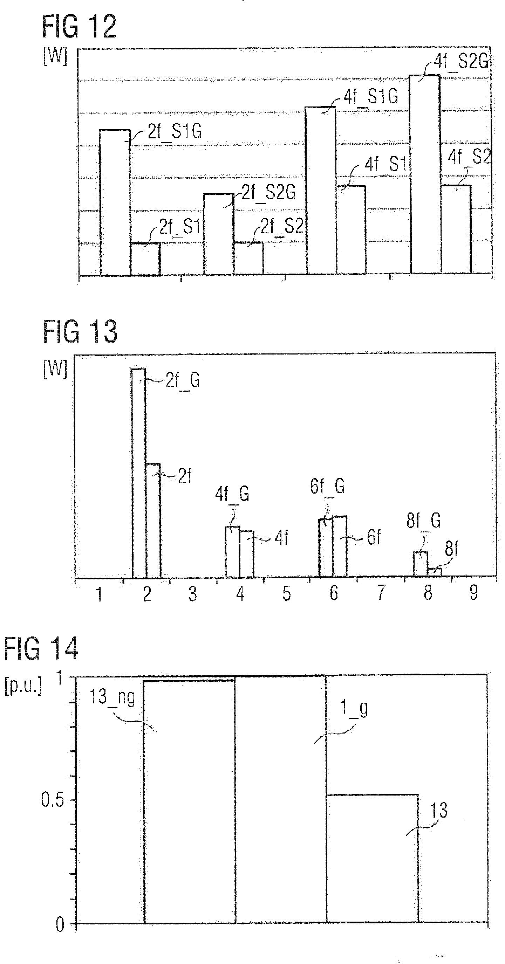

Fig. 12 shows electrical power harmonics for a conventional dual stator assembly as described in Fig. 3 above, and the inventive dual stator assembly as described in Fig. 4A, Fig. 4B or Fig. 5. The diagram shows 2nd harmonics 2f_S1G, 2f_S2G and 4th harmonics 4f_S1G, 4f_S2G in a conventionally-wound segmented dual stator (the suffix G denotes the presence of gaps between stator segments). The diagram clearly shows that the second harmonic 2f_S1G of the first system S1 is significantly greater than the second harmonic 2f_S2G of the second system S2. The same applies to the fourth harmonic. These differences lead to the problems described above. To the right of these columns in each case, the diagram shows the 2nd and 4th harmonics 2f_S1, 2f_S2, 4f_S1, 4f_S2 for the first and second systems S1, S2 of a segmented dual stator according to the invention. The diagram shows that the balanced winding distribution of the inventive dual stator assembly leads to a significant reduction in the undesirable second and fourth harmonics. Furthermore, the diagram clearly shows that the second harmonic 2f_S1 of the first system S1 is essentially identical to the second harmonic 2f_S2 of the second system S2. The same applies to the fourth harmonic. The reduced power harmonics and the balance between them leads to a favourable increase in output power, a smaller DC link capacitor, and a fuller utilisation and therefore greater efficiency of the frequency converters.

Fig. 13 shows electrical power harmonics for one winding system of a dual segmented stator assembly with a conventional winding arrangement (as explained in Fig. 3 above) and for one winding system of the inventive dual stator assembly (as explained in Figs. 4 and 5 above) under single system operation, i.e. in a fault-mode during which only one winding system of a multi-system stator is in operation. The left-hand columns of each pair indicate harmonics 2f G, 4f G, 6f G, 8f G for the conventional dual stator assembly, i.e. the second, fourth, sixth and eighth harmonics respectively. The right-hand columns of each pair indicate corresponding harmonics 2f, 4f, 6f, 8f for the inventive dual stator assembly with its balanced winding distribution. The diagram clearly shows a significant decrease in amplitude of the power harmonics for the winding system of the inventive dual stator assembly. Since the harmonics are lower, the rotor eddy currents are also lower. In a wind turbine with dual stator, this avoids having to derate the power output of the generator, and the DC-link utilization can be optimised.

Fig. 14 shows per-unit rotor eddy current loss 13C, 13G, 13 for a one-piece dual stator assembly, a conventionally wound segmented dual stator assembly, and the inventive segmented dual stator assembly respectively. Each case relates to single-system operation, i.e. during operation when one of the two systems S1, S2 has failed. The highest rotor eddy current loss 13G is observed for the conventionally wound segmented dual stator assembly. A one-piece dual stator assembly has a slightly lower rotor eddy current loss 13C. The inventive segmented dual stator assembly reduces the rotor eddy current 13 by half. Therefore, during single-system operation (a situation which may occur relatively frequently, for example after failure of a frequency converter switch), the power output of the generator does not need to be de-rated.

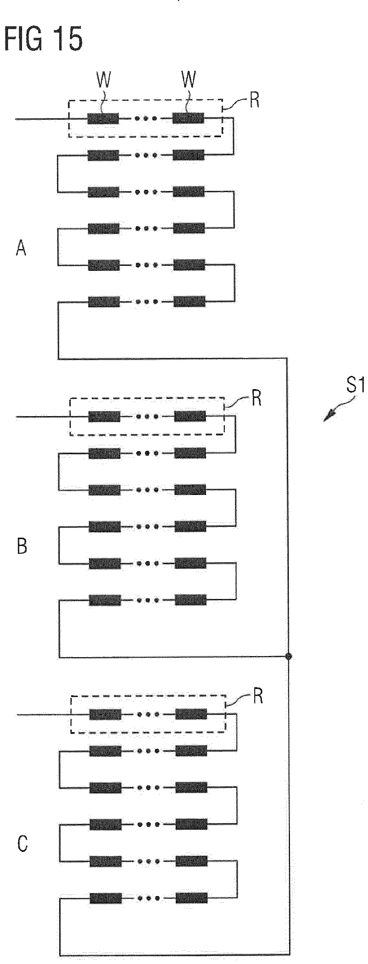

Fig. 15 shows a winding connection scheme for one of two three-phase winding systems S1, S2 of a six-segment stator assembly according to the invention. The diagram shows series connections between the coils or windings W of each phase (A, B or C) of a winding system S1, and the second winding system S2 may be assumed to be identical. The series-connected coils W of a phase arranged on a particular segment are collectively referred to as a branch R. Each branch has the same number of windings. For the six-segment stator under consideration here, there are six such branches for each phase of the winding system S1. Each branch R can comprise two or more windings W. In this exemplary embodiment, the branches R of each phase are also series connected.

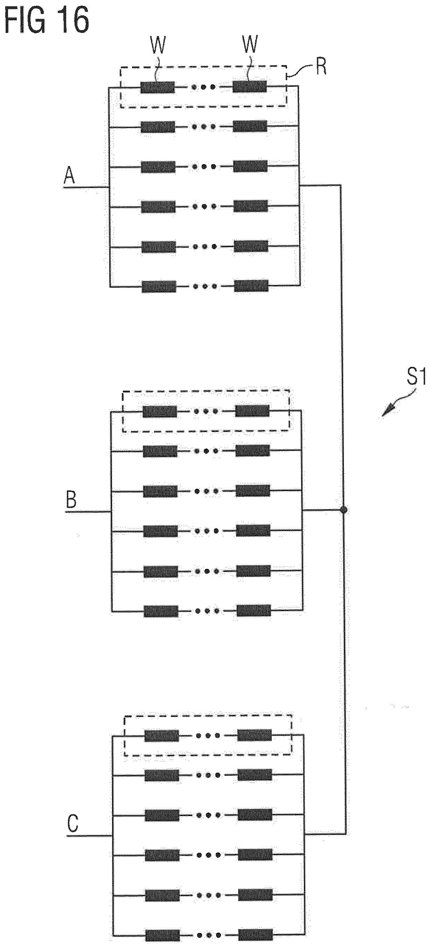

Fig. 16 shows an alternative winding connection scheme for the same stator described in Fig. 15 above. In this exemplary embodiment, the branches R of each phase are connected in parallel.

Fig. 17 is a schematic representation of a wind turbine 4 with a generator 3 comprising a dual stator assembly 1. Electrical power generated by the generator 3 is converted for feeding into a grid 5 via a transformer 50. Frequency conversion is performed by a first converter 30_S1 fed by the first winding system S1 and by a second converter 30_S2 fed by the second winding system S2. When the dual stator 1 is wound in the inventive manner described above, the resulting phase voltages are favourably balanced, leading to an increase in output power and a decrease in output power ripple. As a result, the DC link capacitor C of each converter 30_S1, 30_S2 need not be as large, so that savings can be achieved here also.

Although the present invention has been disclosed in the form of preferred embodiments and variations thereon, it will be understood that modifications and variations could be made thereto without departing from the scope of the invention, which is defined in the appended claims.

For the sake of clarity, it is to be understood that the use of "a" or "an" throughout this application does not exclude a plurality, and "comprising" does not exclude other steps or elements.

## Claims

1. A segmented armature assembly (1, W) for a wind turbine generator (3), comprising
- an annular armature (1) comprising at least six armature segments (10) separated by gaps (G);
- winding sets (s1, s2) of two multi-phase winding systems (S1, S2), wherein each winding set (s1, s2) comprises one winding (W) for each phase of a specific multi-phase winding system (S1, S2);
**characterized by** a first winding distribution (D1), wherein each armature segment (10) carries winding sets (s1, s2) of one winding system only such that any one stator segment (10) is flanked by two armature segments (10), each carrying only winding sets (s1, s2) of the other winding system and wherein the winding sets (s1, s2) on either side of a gap (G) are a mirror image of the winding sets (s1, s2) on either side of the other two closest gaps (G);
or
**characterized by** a second winding distribution (D2), wherein each armature segment (10) carries an alternating arrangement of an even number of winding sets (s1, s2), and wherein the arrangement of winding sets (S1, S2) carried by one armature segment (10) is a mirror image of the arrangement of winding sets (S1, S2) carried by the adjacent armature segments (10).

2. A segmented armature assembly according to claim 1 wherein, in the first winding distribution (D1), the winding sets (s1, s2) of a winding system (S1, S2), which are arranged at the outer ends of two armature segments (10) that are on either side of an intervening armature segment (10), are series-connected or parallel-connected.

3. A segmented armature assembly according to claim 1, wherein, in the second winding distribution (D2), the pair of winding sets (s1, s2) on either side of a gap (G) are series-connected or parallel-connected.

4. A segmented armature assembly according to any of the preceding claims, wherein each winding system (S1, S2) comprises at least two phases.

5. A wind turbine (4) comprising a generator (3) with a segmented armature assembly (1, W) according to any of claims 1 to 4.

6. A method of manufacturing a segmented armature assembly (1, W) according to claim 1, comprising the steps of
- providing a plurality of armature segments (10) of an annular armature (1);
- providing winding sets (s1, s2) of two multi-phase winding systems (S1, S2), wherein a winding set (s1, s2) comprises one winding (W) for each phase of a multi-phase winding system (S1, S2); and
- distributing the winding sets (s1, s2) over the armature (1) according to the first winding distribution (D1) or the second winding distribution (D2).

7. A method according to claim 6, comprising the step of connecting corresponding phase windings (W) of a pair of winding sets (s1, s2) of the same winding system (S1, S2).

8. A method according to claim 7, performed for the first winding distribution (D1) and comprising the step of connecting the phase windings (W) of a pair of winding sets (s1, s2) comprising one winding set (s1, s2) on each of two armature segments (10) on either side of a further armature segment (10).

9. A method according to claim 7, performed for the second winding distribution (D2) and comprising the step of connecting the phase windings (W) of a pair of winding sets (s1, s2) on either side of a gap (G).

## Patentansprüche

1. Segmentierte Armaturanordnung (1, W) für einen Windkraftanlagengenerator (3), die Folgendes umfasst:
- eine ringförmige Armatur (1), umfassend wenigstens sechs durch Zwischenräume (G) getrennte Armatursegmente (10),
- Wicklungssätze (s1, s2) von zwei mehrphasigen Wicklungssystemen (S1, S2), wobei jeder Wicklungssatz (s1, s2) eine Wicklung (W) für jede Phase eines bestimmten mehrphasigen Wicklungssystems (S1, S2) umfasst,
**gekennzeichnet durch** eine erste Wicklungsverteilung (D1), wobei jedes Armatursegment (10) Wicklungssätze (s1, s2) von nur einem Wicklungssystem trägt, sodass jedes beliebige Statorsegment (10) von zwei Armatursegmenten (10) flankiert wird, von denen jedes nur Wicklungssätze (s1, s2) des anderen Wicklungssystems trägt und wobei die Wicklungssätze (s1, s2) auf beiden Seiten des Zwischenraums (G) ein Spiegelbild der der Wicklungssätze (s1, s2) auf beiden Seiten der anderen beiden nächsten Zwischenräume (G) sind,
oder
**gekennzeichnet durch** eine zweite Wicklungsverteilung (D2), wobei jedes Armatursegment (10) eine abwechselnde Anordnung einer geraden Anzahl von Wicklungssätzen (s1, s2) trägt und wobei die von einem Armatursegment (10) getragene Anordnung von Wicklungssätzen (S1, S2) ein Spiegelbild der von den benachbarten Armatursegmenten (10) getragenen Anordnung von Wicklungssätzen (S1, S2) ist.

2. Segmentierte Armaturanordnung nach Anspruch 1, wobei in der ersten Wicklungsverteilung (D1) die Wicklungssätze (s1, s2) eines Wicklungssystems (S1, S2), die an den äußeren Enden der zwei Armatursegmente (10), die sich an beiden Seiten eines zwischengefügten Armatursegments (10) befinden, angeordnet sind, seriell verbunden oder parallel verbunden sind.

3. Segmentierte Armaturanordnung nach Anspruch 1, wobei in der zweiten Wicklungsverteilung (D2) das Paar von Wicklungssätzen (s1, s2) an beiden Seiten eines Zwischenraums (G) seriell verbunden oder parallel verbunden ist.

4. Segmentierte Armaturanordnung nach einem der vorhergehenden Ansprüche, wobei jedes Wicklungssystem (S1, S2) wenigstens zwei Phasen umfasst.

5. Windkraftanlage (4), umfassend einen Generator (3) mit einer segmentierten Armaturanordnung (1, W) nach einem der Ansprüche 1 bis 4.

6. Verfahren zur Herstellung einer segmentierten Armaturanordnung (1, W) nach Anspruch 1, das die folgenden Schritte umfasst:
- Bereitstellen einer Mehrzahl von Armatursegmenten (10) einer ringförmigen Armatur (1),
- Bereitstellen von Wicklungssätzen (s1, s2) von zwei mehrphasigen Wicklungssystemen (S1, S2), wobei ein Wicklungssatz (s1, s2) eine Wicklung (W) für jede Phase eines mehrphasigen Wicklungssystems (S1, S2) umfasst, und
- Verteilen der Wicklungssätze (s1, s2) über die Armatur (1) gemäß der ersten Wicklungsverteilung (D1) oder der zweiten Wicklungsverteilung (D2).

7. Verfahren nach Anspruch 6, umfassend den Schritt des Verbindens entsprechender Phasenwicklungen (W) eines Paars von Wicklungssätzen (s1, s2) desselben Wicklungssystems (S1, S2).

8. Verfahren nach Anspruch 7, ausgeführt für die erste Wicklungsverteilung (D1) und umfassend den Schritt des Verbindens der Phasenwicklungen (W) eines Paars von Wicklungssätzen (s1, s2), das einen Wicklungssatz (s1, s2) auf jedem von zwei Armatursegmenten (10) auf beiden Seiten eines weiteren Armatursegments (10) umfasst.

9. Verfahren nach Anspruch 7, ausgeführt für die zweite Wicklungsverteilung (D2) und umfassend den Schritt des Verbindens der Phasenwicklungen (W) eines Paars von Wicklungssätzen (s1, s2) auf beiden Seiten eines Zwischenraums (G) .

## Revendications

1. Ensemble d'armature segmentée (1, W) pour un générateur (3) d'éolienne, comprenant
- une armature annulaire (1) comprenant au moins six segments (10) d'armature séparés par des espaces (G) ;
- des ensembles de bobines (s1, s2) de deux systèmes de bobines multiphases (S1, S2), dans lequel chaque ensemble de bobines (s1, s2) comprend une bobine (W) pour chaque phase d'un système de bobine (S1, S2) multiphase spécifique ; **caractérisé par** une première distribution de bobine (D1), dans lequel chaque segment d'armature (10) porte les ensembles de bobines (s1, s2) d'un système de bobines uniquement de sorte qu'un segment (10) de stator quelconque est encadré par deux segments (10) d'armature, chacun portant seulement les ensembles de bobines (s1, s2) de l'autre système de bobine et dans lequel les ensembles de bobines (s1, s2) sur l'un ou l'autre côté d'un espace (G) sont une image miroir des ensembles de bobines (s1, s2) sur l'un ou l'autre côté des deux espaces les plus proches (G) ;
ou
**caractérisé par** une seconde distribution de bobines (D2), dans lequel chaque segment (10) d'armature porte un agencement alternatif d'un même nombre pair d'ensembles de bobines (s1, s2), et dans lequel l'agencement des ensembles de bobines (S1, S2) porté par un segment (10) d'armature est une image miroir de l'agencement des ensembles de bobines (S1, S2) portés par les segments (10) de l'armature adjacente.

2. Ensemble d'armature segmentée selon la revendication 1 dans lequel, dans une première distribution de bobines (D1), les ensembles de bobines (s1, s2) d'un système de bobines (S1, S2), qui sont agencés sur les extrémités extérieures de deux segments (10) d'armature qui sont sur l'un ou l'autre côté d'un segment (10) d'armature intermédiaire, sont connectés en série ou connectés en parallèle.

3. Ensemble d'armature segmentée selon la revendication 1 dans lequel, dans une seconde distribution de bobines (D2), la paire des ensembles de bobines (s1, s2) sur l'un ou l'autre côté d'un espace (G) est connectée en série ou connectée en parallèle.

4. Ensemble d'armature segmentée selon l'une quelconque des revendications précédentes, dans lequel chaque système de bobines (S1, S2) comprend au moins deux phases.

5. Eolienne (4) comprenant un générateur (3) avec un assemblage d'armature segmentée (1, W) selon l'une quelconque des revendications 1 à 4.

6. Méthode pour fabriquer un assemblage d'armature segmentée (1, W) selon la revendication 1, comprenant les étapes consistant à
- fournir une pluralité de segments (10) d'armature d'une armature (1) annulaire ;
- fournir des ensembles de bobines (s1, s2) de deux systèmes de bobines multiphase (S1, S2), dans lequel un ensemble de bobines (s1, s2) comprend une bobine (W) pour chaque phase d'un système de bobines (S1, S2) muliphase ; et
- distribuer les ensembles de bobines (s1, s2) sur l'armature (1) selon la première distribution de bobines (D1) ou la seconde distribution de bobines (D2).

7. Méthode selon la revendication 6, comprenant l'étape de connexion des bobines (W) de phase d'une paire d'ensembles de bobines (s1, s2) du même système de bobine (S1, S2).

8. Méthode selon la revendication 7, effectuée par la première distribution de bobine (D1) et comprenant l'étape de connexion des bobines (W) de phase d'une paire d'ensembles de bobines (s1, s2) sur chacun des deux segments d'armature (10) sur l'un ou l'autre côté d'un segment (10) d'armature supplémentaire.

9. Méthode selon la revendication 7, effectuée par la seconde distribution de bobine (D2) et comprenant l'étape de connexion des bobines (W) de phase d'une paire d'ensembles de bobines (s1, s2) sur l'un ou l'autre côté d'un espace (G).
